# FASCICULE DE BREVET EUROPEEN

(11) **EP 2 038 061 B1**
(45) Date de publication et mention de la délivrance du brevet: **25.01.2012**
(21) Numéro de dépôt: 07766113.0
(22) Date de dépôt: 29.05.2007
(51) Int. Cl.: B01L 3/00, B81C 1/00

(54) **DISPOSITIF MICROFLUIDIQUE AVEC MATERIAU DE VOLUME VARIABLE**
MIKROFLUIDVORRICHTUNG MIT VARIABLEM VOLUMENMATERIAL
MICROFLUIDIC DEVICE WITH VARIABLE VOLUME MATERIAL

(30) Priorité: 29.05.2006 FR 0651936
(43) Date de publication de la demande: 25.03.2009
(73) Titulaire: DEBIOTECH S.A., 1004 Lausanne (CH)
(72) Inventeur: VALLET, Véronique, CH-1066 Epalinges (CH); NEFTEL, Frédéric, CH-1005 Lausanne (CH); PIVETEAU, Laurent-Dominique, CH-1030 Bussigny-Pres-Lausanne (CH); SCHNEEBERGER, Niklaus, CH-1009 Pully (CH)
(74) Mandataire: Cardy, Sophie Marie
(86) Numéro de dépôt international: PCT/FR2007/051346
(87) Numéro de publication internationale: WO 2007/138227

(56) Documents cités:
- WO-A-01/17797
- FR-A1- 2 856 046
- SAMEL B ET AL: "Expandable microspheres incorporated in a pdms matrix: a novel thermal composite actuator for liquid handling in microfluidic applications" TRANSDUCERS, SOLID-STATE SENSORS, ACTUATORS AND MICROSYSTEMS, 12TH INNATIONAL CONFERENCE ON, 2003, PISCATAWAY, NJ, USA,IEEE, vol. 2, 9 juin 2003 (2003-06-09), pages 1558-1561, XP010647522 ISBN: 0-7803-7731-1
- GRISS P ET AL: "Liquid handling using expandable microspheres" PROCEEDINGS OF THE IEEE 15TH. ANNUAL INTERNATIONAL CONFERENCE ON MICROELECTRO MECHANICAL SYSTEMS. MEMS 2002. LAS VEGAS, NV, JAN. 20 - 24, 2002, IEEE INTERNATIONAL MICRO ELECTRO MECHANICAL SYSTEMS CONFERENCE, NEW YORK, NY : IEEE, US, vol. CONF. 15, 2002, pages 117-120, XP010577609 ISBN: 0-7803-7185-2
- ANDERSSON H ET AL: "Expandable microspheres-surface immobilization techniques" SENSORS AND ACTUATORS B, ELSEVIER SEQUOIA S.A., LAUSANNE, CH, vol. 84, no. 2-3, 15 mai 2002 (2002-05-15), pages 290-295, XP004360403 ISSN: 0925-4005

## Description

La présente invention concerne un dispositif microfluidique permettant la circulation de liquide. Plus précisément, la présente invention concerne l'utilisation d'un circuit de liquide dans un dispositif de petite taille pour la mise en oeuvre dans les domaines de la chimie, de la biologie, de la biochimie ou dans le domaine médical.

Ce type de systèmes microfluidiques présente un développement récent important puisqu'ils permettent, du fait de leur petite taille, de ne nécessiter que l'utilisation de volumes de liquide limités, ce qui procure un certain nombre d'avantages. En effet, ce type de matériel de petite taille est relativement aisé à fabriquer en grand nombre, pour un coût limité, en intégrant plusieurs fonctionnalités sur des dimensions réduites tout en assurant une fiabilité importante. Notamment, dans le cas de la réalisation d'une analyse au moyen d'une réaction, ces dispositifs de petite taille apportent une sensibilité et une rapidité d'analyse importantes tout en étant facilement transportables.

Pour atteindre ces objectifs, on rencontre des dispositifs microfluidiques réalisés en utilisant les techniques et les matériaux classiquement mis en oeuvre pour l'industrie des semi-conducteurs. Parmi ces dispositifs microfluidiques, on recherche ceux qui permettent une utilisation plus large, avec des trajets de circulation de liquide non totalement prédéfinis à l'avance, c'est-à-dire que le trajet de circulation de liquide peut être finalisé par l'utilisateur parmi plusieurs possibilités. Une telle modularité permet de répondre à des demandes multiples en utilisant le même dispositif microfluidique.

Dans le cas du document WO2004/050242, on propose un dispositif microfluidique permettant de créer, à la demande, par une commande extérieure, l'un parmi plusieurs réseaux microfluidiques à partir d'un empilement de plaques. Dans ce cas, pour la mise en communication de fluide entre deux cavités ou canaux, on réalise l'ouverture par perçage de la paroi qui les sépare au moyen de l'envoi ciblé d'un rayonnement électromagnétique. Pour permettre le déplacement du liquide, on exerce une force de type centrifuge sur celui-ci.

Ce type de technique présente toutefois un certain nombre d'inconvénients. Ainsi, il faut avoir recours à un appareillage externe qui est nécessaire pour faire tourner le dispositif microfluidique afin d'engendrer la force centrifuge, ce qui complique fortement la mise en oeuvre. De plus, on comprend qu'une telle force centrifuge ne permet le déplacement du liquide que dans une seule direction.

On connaît par ailleurs l'existence de matériaux dits activables pouvant faire varier leur volume localement, en particulier pouvant faire augmenter leur volume, sous l'effet d'une activation, notamment d'une activation thermique.

Par exemple, on peut se référer à l'article suivant: B. Sämel, P. Griss, G. Stemme, "expandable microspheres incorporated in a PDMS matrix: a novel thermal composite actuator for liquid handling in microfluidic applications", Transducers '03, 1558-1561 (2003). Dans ce document, on a montré la possibilité de combler, au sein d'un dispositif microfluidique, des vides de petite taille ou bien des réservoirs plus importants en utilisant dans l'empilement une couche formée d'un composite résultant du mélange entre un polymère, en particulier le polydiméthylsiloxane (PDMS), ou silicone, avec des microsphères expansibles, notamment des microsphères de la marque déposée Expancel. Le mélange entre le polydiméthylsiloxane et ces microsphères est désigné dans la présente demande de brevet sous le terme XBPDMS.

La présente invention a pour objectif de proposer un dispositif microfluidique présentant plusieurs possibilités de formation de réseaux de liquide tridimensionnels formés de canaux et/ou de valves et/ou de cavités. Ainsi, ce dispositif microfluidique peut être standard au niveau de la fabrication, l'utilisateur final pouvant, en fonction de ses besoins, choisir parmi l'une de ces possibilités en activant, en une ou plusieurs étapes, une ou plusieurs zones d'un matériau activable présent au sein du dispositif.

Par réseau de liquide tridimensionnel, on entend la formation d'un parcours de liquide au sein de l'empilement formant le dispositif à des hauteurs de l'empilement différentes, ce qui permet, sans augmenter la taille du dispositif, de multiplier les parcours de liquide utilisés simultanément, qui peuvent se croiser sans communiquer entre eux du fait que ce croisement n'intervient pas à la même hauteur, et en particulier pas dans la même couche de l'empilement.

A cet effet, selon la présente invention, on propose un dispositif microfluidique comprenant au moins une première plaque formant le substrat et présentant au moins une perforation et, de chaque côté de cette première plaque, en au moins plusieurs emplacements, un matériau apte à délimiter des portions de canaux, ledit matériau étant formé, en au moins un de ces emplacements, d'un matériau activable pouvant faire varier son volume par activation, ledit matériau étant agencé auxdits emplacements selon une disposition qui permet, lors d'une première phase et par activation d'au moins un emplacement constitué dudit matériau activable, la transformation depuis une première configuration vers une deuxième configuration, ce par quoi est modifié un réseau tridimensionnel qui correspond, dans la deuxième configuration et selon le choix du ou des emplacements qui sont activés dans ladite première phase, à différents parcours de liquide présentant plusieurs portions de canaux parallèles au plan de la première plaque, situées dans des plans décalés, au moins de chaque côté de cette première plaque, et entre lesquelles se situe au moins une desdites perforations, ce par quoi le liquide passe par une desdites perforations entre les portions de canaux situées dans des plans décalés.

De cette manière, on comprend que par le choix du ou des emplacements de matériau activable activés lors de la première phase, on peut modifier, par création ou fermeture d'une ou plusieurs portions de canaux, sur l'un ou les deux côtés de la première plaque mais à proximité de la perforation de la première plaque, un réseau tridimensionnel de liquide. Cette modification de réseau est réalisée par simple activation de zones choisies, correspondant à ou entourant les portions de canaux à créer ou à fermer, du fait que les zones activées changent de volume (augmentation ou diminution de volume). Ceci permet donc, à partir d'un dispositif unique de départ, de réaliser, à la demande, le réseau tridimensionnel souhaité pour l'application considérée.

Par réseau tridimensionnel, on entend un parcours de liquide au sein de l'empilement formant le dispositif à des hauteurs de l'empilement différentes, permettant l'avancement d'une quantité de liquide depuis un premier endroit vers un deuxième endroit. En particulier, on regroupe le cas de la formation d'un seul parcours, parmi plusieurs possibilités, mais aussi le cas de la formation de plusieurs parcours de liquide coexistants dans un réseau de liquide tridimensionnel. Dans ce dernier cas, cela permet, sans augmenter la taille du dispositif, de multiplier les parcours de liquide utilisés simultanément, qui peuvent se croiser sans communiquer entre eux du fait que ce croisement n'intervient pas dans la même couche de l'empilement.

Cette solution présente aussi l'avantage supplémentaire, de permettre, outre une facilité de mise en oeuvre, également une adaptabilité d'un dispositif standard au niveau de sa fabrication, pour remplir des fonctions différentes mettant en jeu un ou plusieurs parcours de liquide. En effet, la variation de volume du matériau activable peut être commandé de manière ciblée très facilement.

On peut prévoir que seulement une partie du matériau disposé de chaque côté de la première plaque est formé dudit matériau activable, ou encore que l'ensemble du matériau disposé de chaque côté de la première plaque est formé dudit matériau activable.

Dans le premier cas, le matériau activable peut former tous les emplacements situés sur l'un des deux côtés de la première plaque ou seulement une partie d'entre eux.

On peut prévoir également que ledit matériau activable est disposé en au moins un emplacement situé de chaque côté de ladite première plaque.

On prévoit que ledit matériau activable est du type qui augmente de volume lorsqu il est activé, mais ce matériau activable peut également être du type qui diminue de volume lorsqu il est activé.

Selon la catégorie de matériau activable, on utilise un matériau qui est activable thermiquement, chimiquement ou par une stimulation électromagnétique.

On peut bien entendu utiliser dans le même dispositif plusieurs types et/ou catégories de matériaux activables.

Le ou les emplacements de chaque face de la (ou des) plaque(s) formant le substrat et qui est (sont) recouvert(s) de matériau activable, peu(ven)t être localisé(s) à la surface de cette (ces) plaque(s) ou bien recouvrir une grande étendue, et notamment toute la surface de cette (ces) plaque(s). Dans cette dernière hypothèse, ledit matériau activable est formé d'au moins une couche recouvrant la première plaque.

Globalement, grâce à la solution selon la présente invention, il est possible de permettre une circulation de liquide tridimensionnelle, et notamment de former plus de canaux et/ou cavités, qui peuvent se croiser sans communiquer entre eux, avec un dispositif de petite taille. De plus, à partir d'une structure de dispositif donnée, l'utilisateur peut, après la fabrication adapter ce dispositif selon l'agencement qui correspond à son besoin.

Selon un premier mode de réalisation, l'activation du matériau engendre des canaux inexistants dans l'empilement de départ. Cette création de canal peut s'obtenir tant par activation des zones correspondantes aux canaux d'un matériau activable qui diminue de volume lorsqu'il est activé que par activation des zones entourant celles destinées à former les canaux d'un matériau activable qui augmente de volume lorsqu'il est activé.

Dans ce cas, lors de la première phase, lors de la transformation depuis la première configuration vers la deuxième configuration, la modification du réseau tridimensionnel correspond à une création, entre ces emplacements activés, desdits canaux formant, avec ladite perforation, ledit réseau tridimensionnel. L'ouverture de ces canaux permet l'arrivée du liquide dans une partie du dispositif qui n'était pas accessible au liquide avant la transformation de la première phase.

Avantageusement, on prévoit que la disposition du matériau activable permet, dans une deuxième phase au cours de laquelle on active des emplacements non préalablement activés, de combler des canaux précédemment crées lors de la première phase, ce par quoi on referme au moins une portion du réseau tridimensionnel. La fermeture de ces canaux ou de ces portions de canaux permet la sortie en dehors de ces canaux en direction d'une autre partie du dispositif qui n'était pas remplie de liquide avant la transformation de la deuxième phase.

Selon une première variante du premier mode de réalisation, l'avancement du liquide dans le réseau tridimensionnel s'effectue essentiellement parallèlement au plan de la première plaque. C'est notamment le cas si le dispositif est formé d'un empilement qui, s'agissant de la partie trajet de liquide, n'utilise que la première plaque et le matériau activable qui la recouvre.

Dans ce cas, lors de la première phase, lors de la transformation depuis la première configuration vers la deuxième configuration, la modification du réseau tridimensionnel correspond à une création, entre ces emplacements activés, des canaux de chaque côté de la première plaque, ces canaux formant, avec ladite perforation, ledit réseau tridimensionnel. L'ouverture de ces canaux permet l'arrivée du liquide dans une partie du dispositif qui n'était pas accessible au liquide avant la transformation de la première phase, de l'autre côté de la première plaque car le liquide peut traverser cette dernière.

Avantageusement, on prévoit que la disposition du matériau activable permet, dans une deuxième phase au cours de laquelle on active des emplacements non préalablement activés, de combler des canaux précédemment crées lors de la première phase, ce par quoi on referme au moins une portion du réseau tridimensionnel de chaque côté de la première plaque. La fermeture de ces canaux permet la sortie en dehors de ces canaux en direction d'une autre partie du dispositif située de l'autre côté de la première plaque et qui n'était pas remplie de liquide avant la transformation de la deuxième phase.

Selon une deuxième variante du premier mode de réalisation, l'avancement du liquide dans le réseau tridimensionnel s'effectue parallèlement au plan de la première plaque mais aussi de façon orthogonale au plan de la première plaque, c'est-à-dire à travers les différentes couches de l'empilement. Ceci est possible quand le dispositif est formé d'un empilement qui, s'agissant de la partie qui comporte le réseau tridimensionnel et/ou réseau de liquide, comporte au moins une autre plaque formant un substrat, en plus de la première plaque.

Dans le cas de la deuxième variante du premier mode de réalisation, le dispositif comporte en outre au moins une deuxième plaque de substrat présentant des perforations décalées par rapport aux perforations de la première plaque, le matériau activable disposé entre la première plaque et la deuxième plaque présentant au moins un passage situé dans le prolongement de l'une des perforations de la première plaque de sorte que lors de la première phase, l'activation des emplacements du matériau activable permet la création de canaux réalisant la mise en communication de liquide entre une perforation de la première plaque et une perforation de la deuxième plaque.

En fait, on prévoit au moins deux plaques de substrat, c'est-à-dire deux, trois ou davantage, présentant des perforations décalées entre deux plaques successives, qui peuvent constituer des réservoirs de liquide, et entre lesquelles on peut faire circuler le liquide, notamment par gravité, de haut en bas.

Ainsi, par exemple, le dispositif comporte en outre au moins une troisième plaque de substrat présentant des perforations décalées par rapport aux perforations de la deuxième plaque, le matériau activable étant disposé également entre la deuxième plaque et la troisième plaque et présentant au moins un passage situé dans le prolongement de l'une des perforations de la deuxième plaque de sorte que lors d'une troisième phase, l'activation des emplacements du matériau activable situé entre la deuxième plaque et la troisième plaque permet la création de canaux réalisant la mise en communication de liquide entre une perforation de la deuxième plaque et une perforation de la troisième plaque.

De cette façon, le passage du liquide depuis un étage vers un étage inférieur de l'empilement peut permettre, par mélange dans une perforation, des réactions entre les différents liquides.

Par exemple, cette circulation de liquide peut permettre de réaliser le mélange entre deux ou davantage de liquides différents.

Selon une alternative de réalisation du premier mode de réalisation, le dispositif comporte en outre, en regard des emplacements de matériau activable susceptibles de former des portions de canaux, une couche anti-adhésion entre la première plaque et le matériau activable.

Cette alternative permet d'éviter que lors de l'activation du matériau activable, les zones du matériau activable qui se transforment en un canal ne restent collées à la plaque formant le substrat, et assurer la séparation aisée entre cette plaque et le matériau, par laquelle est formé le canal.

Selon un deuxième mode de réalisation, l'activation du matériau engendre la fermeture de canaux préexistants dans l'empilement de départ. Cette fermeture de canal peut s'obtenir tant par activation des zones correspondantes aux canaux d'un matériau activable qui augmente de volume lorsqu'il est activé que par activation des zones entourant celles destinées à former les canaux d'un matériau activable qui diminue de volume lorsqu'il est activé.

Dans ce cas, dans la première configuration il existe un réseau tridimensionnel créant un parcours de liquide avec plusieurs portions de canaux formées de canaux parallèles au plan de la première plaque et situées dans des plans décalés, au moins de chaque côté de cette première plaque, entre lesquelles le liquide passe par une desdites perforations et en ce que, lors de la première phase, la modification du réseau tridimensionnel correspond à une fermeture d'au moins un desdits canaux par activation des emplacements correspondants du matériau activable, ce par quoi on forme une deuxième configuration obligeant le liquide à sortir du canal ainsi fermé et à se déplacer dans le réseau.

Avantageusement, on prévoit que lors de la première phase, on active successivement plusieurs emplacements de matériau activable, ce par quoi on réalise successivement la fermeture de plusieurs desdits canaux, ce qui oblige le liquide à sortir du canal qui se ferme et à se déplacer successivement dans le réseau.

En effet, on peut de cette façon faire avancer une quantité de liquide, pas à pas, au fur et à mesure de la fermeture de canaux situés le long du réseau tridimensionnel ou d'une portion du réseau tridimensionnel formant le parcours de cette quantité de liquide.

De plus, la présente invention porte sur une utilisation d'un dispositif selon l'invention, tel que présenté précédemment, pour la réalisation d'un mélange d'au moins deux liquides différents, ledit mélange étant réactionnel, c'est-à-dire qu'une réaction, notamment chimique se produit lors de la rencontre entre les liquides.

Dans ce cas, on prévoit en particulier que ledit dispositif permet de conduire ledit mélange de liquides vers une cavité permettant une analyse par détection de type optique, électrochimique électromagnétique ou magnétique, car cette cavité est équipée ou reliée à un système de détection.

A titre d'exemple pour ce système de détection, pour l'analyse par détection optique, il s'agit d'utiliser une source de lumière (comme un laser, une diode électroluminescente ou une lampe spectrale,...) et un détecteur (comme un photomultiplicateur ou une photodiode semiconductrice). On peut par exemple faire une mesure d'absorption de la lumière émise par le mélange obtenu lors de la réaction. Dans ce cas, on mesure le ratio d'intensité entre la lumière émise par la source et celle détectée par le détecteur placé sur le mélange. On peut aussi choisir, pour un des liquides, un réactif fluorescent : dans ce cas on va mesurer l'intensité de la lumière émise par fluorescence après excitation par la source lumineuse.

Pour l'analyse par détection électrochimique, on utilise par exemple deux électrodes (en platine, or, argent,..) qui pénètrent dans le mélange de liquide. Le principe est d'appliquer une tension ou un courant constant, via ces électrodes, dans le mélange et de mesurer le courant résultant ou la tension résultante, via ces électrodes.

Enfin, pour l'analyse par détection électromagnétique ou magnétique, on peut par exemple utiliser, dans l'un au moins des liquides des aimants sous la forme de petites billes migrant dans ledit mélange de liquides sous l'effet du champ électromagnétique ou magnétique.

D'autres avantages et caractéristiques de l'invention ressortiront à la lecture de la description suivante faite à titre d'exemple et en référence aux dessins annexés dans lesquels :
- la figure 1 est une vue en coupe schématique selon la direction I-I de la figure 2 d'une première variante du premier mode de réalisation d'un dispositif selon l'invention dans sa première configuration ;
- la figure 2 est une vue de dessus partielle du dispositif de la figure 1 selon la direction II-II ;
- la figure 3 est une vue similaire à celle de la figure 1, montrant la deuxième configuration obtenue;
- la figure 4 est une vue similaire à celle de la figure 1 pour une alternative de réalisation ;
- la figure 5 est une vue en coupe selon la direction V-V de la figure 6 d'une deuxième variante du premier mode de réalisation d'un dispositif selon l'invention dans sa première configuration ;
- La figure 6 est une vue de dessus partielle du dispositif de la figure 5 selon la direction VI-VI;
- Les figures 7 à 11 sont des représentations similaires à celle de la figure 5 montrant le fonctionnement possible de ce dispositif ;
- la figure 12 est une vue en coupe schématique d'un dispositif selon le deuxième mode de réalisation de l'invention dans sa première configuration ; et,
- les figures 13 et 14 montrant le fonctionnement possible du dispositif de la figure 12.

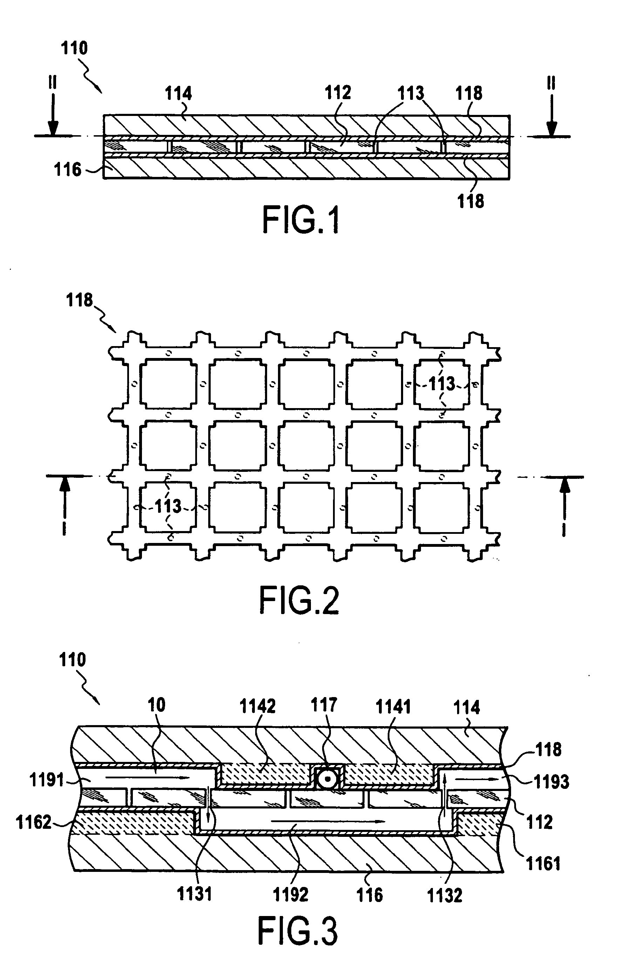

On se reporte en premier lieu aux figures 1 à 11 exposant des exemples de mise en oeuvre du premier mode de réalisation de l'invention pour lequel c'est l'activation du matériau activable qui engendre des canaux inexistants dans l'empilement de départ.

On se reporte d'abord aux figures 1 à 4 représentant plusieurs exemples de réalisation d'une première variante du premier mode de réalisation, dans laquelle on réalise un réseau tridimensionnel dans lequel le liquide progresse essentiellement parallèlement au plan de l'empilement.

Les figures 1 à 3 représentent un dispositif 110 formant un empilement qui est constitué d'une première plaque 112 et de deux couches de matériau activable 114 et 116 recouvrant chacune l'une et l'autre des deux faces de la première plaque 112.

La première plaque 112 formant le substrat peut être réalisée dans différents matériaux rigides, en particulier des matériaux inertes tels que le verre, ou le Pyrex, ou le polydiméthylsiloxane (PDMS ou silicone).

cette première plaque 112 est parcourue de perforations 113 la traversant de part en part et qui sont réparties régulièrement sur toute la surface.

Les couches 114 et 116 de matériau activable sont par exemple réalisées en XBPDMS, à savoir par mélange de polydiméthylsiloxane et de microsphères de type Expancel (marque déposée). Ces couches 114 et 116 peuvent être déposées sous forme liquide ou visqueuse puis être réparties régulièrement en une couche mince par centrifugation sur l'une puis l'autre face de la première plaque 112, avant séchage.

Avant la création des couches 114 et 116 de matériau activable, on réalise au préalable le dépôt d'un matériau anti-adhésion selon un motif 118 visible sur la figure 2, sur chaque face de la première plaque 112, ce motif formant un réseau qui se trouve dans le prolongement des perforations 113 de la première plaque 112.

Par exemple, ce matériau anti-adhésion peut être métallique, par exemple de l'or, et être déposé sur la première plaque 112 par les techniques classiques de photolithographie utilisant des masques.

A ce stade, il faut noter que d'une façon générale, ce matériau anti-adhésion peut se trouver sur la première plaque 112, ou sur les couches 114 et 116 de matériau activable, ou à la fois sur les deux. Si ce matériau anti-adhésion est disposé sur les couches 114 et 116 de matériau activable, on comprend alors qu'il recouvre les perforations 113.

Le motif 118 est formé d'un réseau de lignes orthogonales qui se croisent en un emplacement plus large, des perforations 113 de la première plaque 112 étant situées le long de ces lignes orthogonales, en dehors de ces d'emplacements de croisement.

Dans l'exemple illustré sur les figures 1 à 3, le motif 118 de matériau anti-adhésion recouvre les perforations 113 de la première plaque 112.

Le rôle du matériau anti-adhésion déposé selon le motif 118 est de garantir, lorsqu'une zone du matériau activable est activée, que la zone voisine de ce matériau activable, qui n'est pas activée mais qui se trouve en regard d'une portion de ce motif 118, se sépare et ne reste pas accolée à la première plaque 112.

On se reporte maintenant à la figure 3, dans laquelle, on obtient différents canaux 117 et 119 obtenus par activation de différentes zones des couches 114 et 116 de matériau activable, cette figure 3 correspondant à la deuxième configuration du dispositif 110 dont la première configuration est représentée sur la figure 1.

Plus précisément, sur la figure 3 on voit la section transversale d'un tronçon un premier canal 117 orthogonal à la figure, qui est obtenu par activation des deux zones 1141 et 1142 de la couche de matériau activable 114 qui l'entourent.

Sur la figure 3, on voit également la section longitudinale de trois tronçons 1191, 1192 et 1193 d'un deuxième canal 119 passant de part et d'autre de la première plaque 112 : les deux tronçons 1191 et 1193 situés dans la couche de matériau activable supérieure 114 sont formés par activation des zones 1141, 1142 et d'autres zones non visibles entourant ces tronçons de canaux 1191 et 1193 de la couche de matériau activable supérieure 114.

Le tronçon 1192 du canal 119 est obtenu par activation des zones 1161 et 1162 de la couche 116 de matériau activable inférieure et d'autres zones non visibles entourant ce tronçon 1192.

Dans l'exemple réalisé, ce tronçon 1192 s'étend longitudinalement à l'emplacement d'une des lignes du motif 118 du réseau anti soudure, entre des perforations 1131 et 1132 de la première plaque 112 qui mettent le tronçon 1192 en communication de liquide avec les tronçons 1191 et 1193 du canal 119.

On comprend donc que c'est en activant les zones des couches 114 et 116 qui entourent les tronçons de canaux que l'on crée ces différents canaux qui peuvent cheminer en regard des lignes du motif 118 du réseau anti soudure, de chaque côté de la première plaque 112.

Ainsi, on comprend également, comme il apparaît sur la figure 3, que l'on peut former des canaux 117 et 119, qui se croisent sans toutefois mélanger les liquides qu'ils contiennent et qui se trouvent séparés de part et d'autre de la première plaque 112 à l'emplacement du croisement de ces canaux 117 et 119.

Dans cette alternative de réalisation, on comprend qu'au départ il n'existe aucun espace entre la première plaque 112 et les couches 114 et 116 de matériau activable, les canaux 117 et 119, qui définissent un espace de circulation du liquide, étant formés par activation de zones des couches de matériau activable 114 et 116 entourant l'emplacement des canaux que l'on construit.

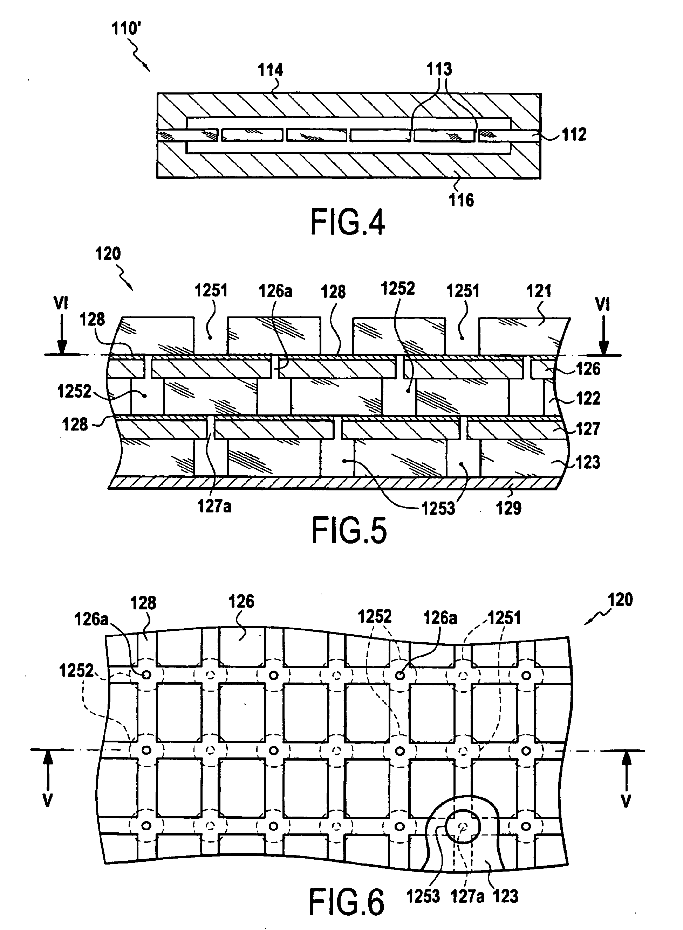

On se reporte maintenant à la figure 4. Il s'agit là d'une autre alternative de la première variante du premier mode de réalisation dans sa première configuration, avant toute activation du matériau activable : dans ce cas, on retrouve la première plaque 112 trouée par les perforations 113, mais ici les couches de matériau activable 114 et 116, respectivement supérieure et inférieure, ont été disposées dans l'empilement ainsi formé de façon à ce qu'elles ne soient pas en contact avec la première plaque 112, mis à part la zone périphérique du dispositif 110'.

Ceci est par exemple réalisé par moulage des couches de matériau activable 114 et 116, avant leur fixation sur la plaque 112.

Dans ce cas, pour réaliser la formation du réseau tridimensionnel 10, on active des zones de chaque couche 114 et 116 de matériau activable qui vont entourer les canaux que l'on souhaite créer. En effet, dans ces zones activées, par augmentation du volume du matériau constituant les couches 114, 116, ces zones vont venir en contact avec la première plaque 112 pour former un réseau tridimensionnel 10 qui peut être identique à celui de la figure 3 si l'on considère l'activation des zones 1141, 1142, 1161 et 1162.

Il faut noter que dans cette alternative de la première variante du premier mode de réalisation représentée sur la figure 4, il n'y a pas de matériau anti-adhésion.

On se reporte maintenant aux figures 5 à 11 présentant un exemple d'une deuxième variante du premier mode de réalisation de l'invention sous la forme d'un dispositif 120.

Ici, on cherche à faire circuler un ou plusieurs liquide(s) dans un réseau tridimensionnel où l'on réalise un parcours de liquide depuis le haut vers le bas de l'empilement, notamment par gravité. En particulier, on cherche à former un réseau de canaux et/ou de cavités permettant l'aspiration de liquides différents, leurs mélanges et la réutilisation de ces mélanges.

Dans l'exemple de réalisation illustré on dispose d'un empilement comportant trois plaques percées, formant chacune un substrat, par exemple en verre, cet empilement étant formé d'une première plaque 121, d'une deuxième plaque 122 et d'une troisième plaque 123.

Chacune de ces plaques 121, 122 et 123 présente des perforations, respectivement 1251, 1252 et 1253, traversant les plaques et présentant des dimensions relativement étendues formant des petites cavités. Entre chacune de ces plaques 121,122 et 123 prises deux à deux, on a disposé une couche de matériau activable, elle-même recouverte d'un motif 128 de matériau anti-adhésion, visible sur la figure 6.

Plus précisément, entre la première plaque 121 et la deuxième plaque 122, on a disposé une couche 126 de matériau activable qui présente des passages 126a situés dans le prolongement vertical des perforations 1252 de la deuxième plaque 122.

Comme les perforations 1251 de la première plaque 121 sont décalées par rapport aux perforations 1252 de la deuxième plaque 122, on comprend qu'au départ il n'y aucune communication de fluide entre les perforations 1251 et 1252 des première et deuxième plaques 121 et 122. Au-dessus de la couche de matériau activable 126, on retrouve le motif de matériau anti soudure 128 tel qu'illustré sur la figure 6.

Sur cette figure, on visualise le décalage dans le plan du dispositif 120, entre les emplacements des perforations 1252 de la deuxième plaque 122, concentriques autour des passages 126a, et des perforations 1251 (représentées en traits pointillés) de la première plaque 121.

Ce motif 128 de matériau anti-adhésion forme aussi un ensemble de lignes qui se croisent en regard des perforations 1251, 1252 et 1253 des plaques 121, 122 et 123.

Dans le cas illustré, le motif 128 de matériau anti-adhésion est déposé sur la première plaque 121, il ne recouvre pas les passages 126a de la couche de matériau activable 126. Par contre, selon une autre possibilité (non représentée), le motif 128 de matériau anti-adhésion est déposé sur la couche de matériau activable 126 de sorte qu'il recouvre les passages 126a. Selon encore une autre possibilité (non représentée), ce motif 128 de matériau anti-adhésion est déposé à la fois sur la couche de matériau activable 126 et sur la première plaque 121.

Également, entre la deuxième plaque 122 et la troisième plaque 123, on a disposé une couche 127 de matériau activable qui présente des passages 127a situés dans le prolongement vertical des perforations 1253 de la troisième plaque 123. Au-dessus de la couche de matériau activable 127, on retrouve un motif de matériau anti-adhésion similaire au motif 128 présenté précédemment.

Dans cet exemple, on voit, sur la figure 5, que les perforations 1251 et 1253, respectivement de la première plaque 121 et de la troisième plaque 123, sont verticalement alignées mais cela correspond uniquement à un cas particulier.

Enfin, pour compléter l'empilement 120, on utilise, pour former un fond refermant la partie inférieure des perforations 1253, une plaque de fermeture 129 qui est reliée de manière étanche à la troisième plaque 123. Cette plaque de fermeture 129 est par exemple réalisée en verre ou en Pyrex et elle est reliée à la troisième plaque 123 par une technique de soudage telle que la technique du « plasma bonding » (ou soudage par activation plasma).

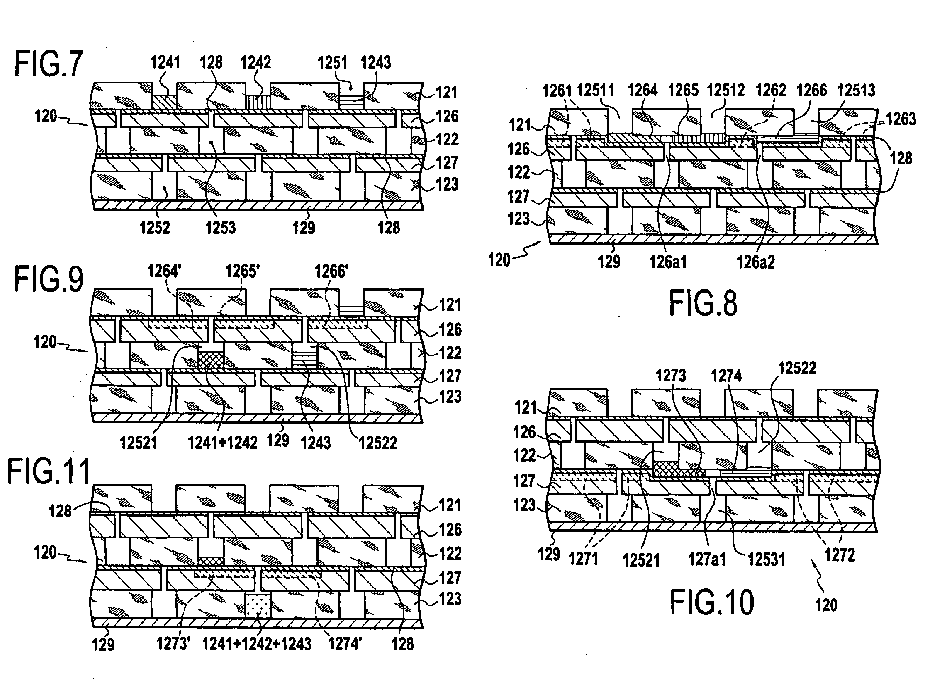

On se reporte maintenant aux figures 7 à 11 qui représentent différentes étapes mises en oeuvre lors de l'utilisation d'un tel dispositif 120 afin de réaliser des mélanges.

Sur la figure 7, on retrouve le dispositif 120 de la figure 5 qui comportent trois liquides différents 1241, 1242 et 1243 disposés respectivement dans trois perforations 1251 alignées de la première plaque 121 constituée des perforations 12511,12512 et 12513. Dans cette situation, les trois liquides 1241, 1242 1243 sont séparés les uns des autres sans aucune possibilité de se mélanger.

Après cette étape de remplissage des perforations 12511, 12512 et 12513 de la première plaque 121, formant des cavités supérieures, on va modifier la structure de la couche de matériau activable 126 située entre la première plaque 121 et la deuxième plaque 122 afin de permettre la descente de tout ou partie de ces liquides 1241, 1242 et 1243.

À cet effet, comme on peut le voir sur la figure 8, par activation de certaines zones parmi lesquelles les zones 1261, 1262 et 1263 de la couche de matériau activable 126, on forme des canaux, notamment les canaux 1264, 1265 et 1266 visibles sur la figure 8. Plus précisément, le canal 1264 relie la perforation 12511 contenant le premier liquide 1241 au passage 126a1 de la couche de matériau activable 126 qui est lui-même mis en communication de fluide avec la perforation 12512 par le canal 1265.

À ce stade, une partie du liquide 1241 a pénétré dans le canal 1264 et une partie du liquide 1242 a pénétré dans le canal 1265. Par ailleurs, la création du canal 1266 relie la perforation 12513 au passage 126a2 de la couche de matériau activable 126.

A ce stade, il faut noter que la réalisation du mélange entre les liquides 1241 et 1242 peut être, selon la nature de ces liquides réactionnel, c'est-à-dire qu'une réaction, notamment chimique se produit lors de la rencontre entre les liquides 1241 et 1242.

Lors de la phase suivante, dont le résultat est visible sur la figure 9, on a activé les zones 1264', 1265' et 1266' de la couche de matériau activable 126 qui correspondaient précédemment à l'emplacement des canaux 1264, 1265 et 1266.

Cette fermeture des canaux 1264, 1265 et 1266 entraîne le déplacement des liquides qu'ils contenaient en aval de la façon suivante : le liquide 1241 qui était présent dans le canal 1264 lors de la configuration précédente représentée sur la figure 8, ainsi que le troisième liquide 1243 qui était présent dans le canal 1265, sont passés à l'intérieur de la perforation 12521 de la deuxième plaque 122 via le passage 126a1, resté intact, de la couche de matériau activable 126 et le liquide 1243 qui était présent dans le canal 1266 sur la figure 8 est passé à l'intérieur de la perforation 12522 de la deuxième plaque 122 via le passage 126a2, resté intact, de la couche de matériau activable 126.

Ensuite, par la mise en oeuvre des deux phases suivantes représentées sur les figures 10 et 11, on va finaliser le mélange entre les trois liquides de départ 1241, 1242 et 1243.

Comme on peut le voir sur la figure 10, on réalise ensuite l'activation des zones 1271 et 1272 de la couche 127 de matériau activable située entre la deuxième plaque 122 et la troisième plaque 123, ce qui permet la création des canaux 1273 et 1274 qui se remplissent respectivement du mélange entre les liquides 1241 et 1242 et du liquide 1243, et qui relient respectivement des perforations 12521 et 12522 de la deuxième plaque 122 au passage 127a1 de la couche de matériau activable 127, situé plus bas.

Enfin, pour finaliser le mélange, comme il apparaît sur la figure 11, on active les zones 1273' et 1274' de la couche 127, qui formaient précédemment les canaux 1273 et 1274, afin d'obliger le liquide qui était présent dans ces deux canaux à passer, via le passage 127a1, dans la perforation 12531 de la troisième plaque 123 à l'intérieur de laquelle on a ainsi formé le mélange entre les liquides 1241, 1242 et 1243.

On comprend que le mélange entre les trois liquides 1241, 1242 et 1243 qui se trouve présent dans la perforation 12531 de la troisième plaque 123, peut ensuite être utilisé pour une nouvelle réaction dans une autre portion, non représentée, du dispositif microfluidique 120 et qui peut par exemple présenter un réseau tridimensionnel conforme à la première variante du premier mode de réalisation qui a été présentée précédemment en relation avec les figures 1 à 4.

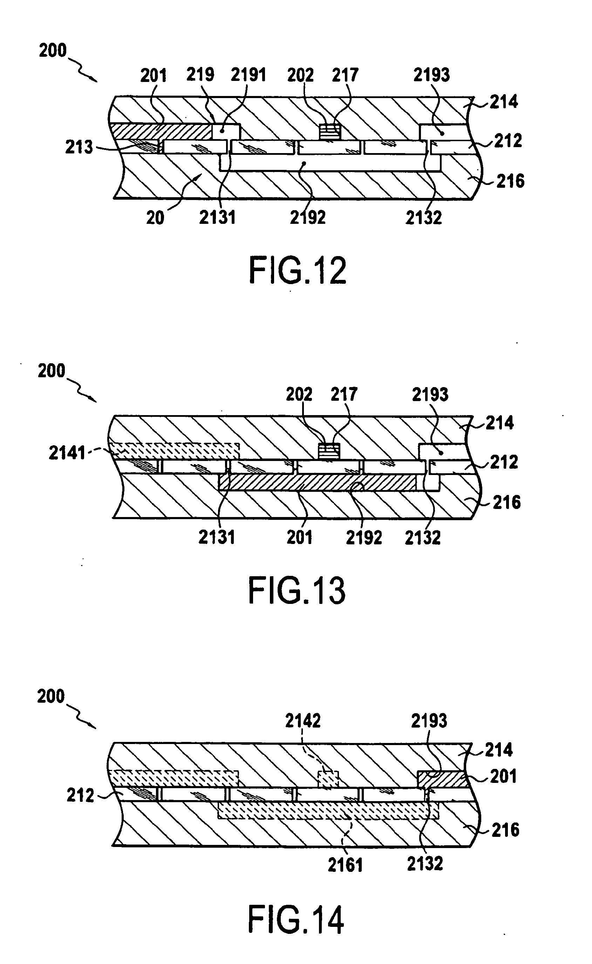

On se reporte maintenant aux figures 12 à 14 présentant un exemple de mise en oeuvre du deuxième mode de réalisation de invention pour lequel l'activation du matériau activable engendre la fermeture de canaux préexistants dans l'empilement de départ, ce qui fait avancer le liquide.

Dans ce cas, on propose un dispositif 200 qui est illustré sur les figures 12 à 14 et formant au départ un empilement présentant déjà des canaux 217 et 219 formant des passages de liquide. Plus précisément, l'empilement formant le dispositif 200 comporte une première plaque 112, par exemple en verre, recouverte de perforations 213 régulièrement réparties à sa surface.

Sur chacune de ses deux faces, cette plaque 212 est recouverte d'une couche de matériau activable qui a, préalablement à sa fixation sur la première plaque 212, été conformée afin de présenter des creux destinés à former les canaux 217 et 219.

Ainsi, comme il apparaît sur la figure 12, la couche de matériau activable supérieure 214 comporte, sur sa face tournée en direction de la première plaque 212, des creux parmi lesquels les tronçons 2191 et 2193 du canal 219 ainsi que le canal 217. À cet effet, cette couche 214 a par exemple été réalisée par moulage sur une empreinte présentant des formes en saillie complémentaires de celles formant ces zones en creux, parmi lesquelles les tronçons 2191 et 2193 du canal 219 ainsi que le canal 217.

De la même façon, comme il apparaît sur la figure 12, la couche de matériau activable inférieure 216 comporte, sur sa face tournée en direction de la première plaque 212, des creux parmi lesquels le tronçon 2192 du canal 219.

Dans ce cas, on comprend donc que les creux destinés à recevoir du liquide, par exemple sous la forme de canaux ou de cavités, ont été créés dans les couches de matériau activable avant leur assemblage dans l'empilement, de sorte qu'il n'est pas utile d'utiliser un matériau anti-adhésion.

Dans le cas de ce deuxième mode de réalisation, on doit donc prendre soin, lors de la formation du dispositif 200, et en particulier pendant l'étape d'assemblage entre la première plaque 212 et les deux couches 214 et 216 de matériau activable, qui peut par exemple être réalisé selon la technique du « plasma bonding » (ou soudage par activation plasma), de bien positionner les emplacements en creux des deux couches 214 et 216 de matériau activable en regard des perforations 213 de la première plaque 212, afin de permettre la communication de liquide entre les tronçons de canaux 2192, 2192 et 2193 situés de part et d'autre de la première plaque 212 et qui doivent appartenir au même canal du réseau fluidique tridimensionnel 20.

Ainsi, dans le cas illustré, le tronçon 2191 du canal 219 communique avec le tronçon 2192 via la perforation 2131 et le tronçon 2192 communique avec le tronçon 2193 via la perforation 2132. Par contre, la section du canal 217 visible sur la figure 12 se trouve placée au-dessus du tronçon 2192 de façon qu'aucune perforation 213 ne les relie de sorte que les canaux 217 et 219 sont parfaitement séparés par la première plaque 212 alors qu'ils se croisent en vue de dessus.

Les figures 12 à 14 illustrent un exemple d'utilisation de ce dispositif 200 : comme on le voit sur la figure 12, un liquide 201 est disposé dans le tronçon 2191 du canal 219 tandis qu'un autre liquide 202, différent, est disposé dans le canal 217.

Lors d'une première phase visible sur la figure 13, on active la zone 2141 de la couche de matériau activable supérieure 214 correspondant au tronçon 2191 de sorte que le liquide 201 qui s'y trouvait précédemment se trouve déplacé en aval jusque dans le tronçon 2192, via la perforation 2131, en passant, ainsi, de l'autre côté de la première plaque 212.

Lors d'une deuxième phase, visible sur la figure 14, on active d'une part la zone 2142 de la couche de matériau activable supérieure 214 correspondant à l'emplacement du canal 217 qui était visible sur les figures 12 et 13, de sorte que le liquide 202 se trouve déplacé dans une autre portion du canal 217 non visible sur la figure 14. Également, lors de cette deuxième phase on active d'autre part la zone 2161 de la couche de matériau activable inférieure 216 correspondant préalablement à l'emplacement du tronçon 2192 de sorte que le liquide 201 qui s'y trouvait lors de la phase précédente, se trouve déplacé en aval jusque dans le tronçon 2193 du canal 219 situé de l'autre côté de la première plaque 212, dans la couche de matériau activable 216, en passant via la perforation 2131.

Ici, on comprend donc que le déplacement du liquide 201 ou 202 s'effectue, depuis des tronçons de canaux préexistants, en refermant ce tronçon du canal, par activation de la zone correspondante de la couche de matériau activable qui porte ce tronçon du canal, ce par quoi le liquide est poussé dans le tronçon de canal situé plus en aval.

Toutefois, on comprend que l'on peut aussi, en outre, prévoir d'utiliser un tel dispositif 200 qui comporte des tronçons de canaux préexistants, pour créer d'autres nouveaux tronçons de canaux par activation des zones entourant un tel tronçon dans la même couche de matériau activable, comme dans le cas du premier mode de réalisation.

Il faut noter que le dispositif selon le deuxième mode de réalisation conforme aux figures 12 à 14 qui vient d'être décrit peut aussi, au départ, consister en un dispositif analogue à celui du premier mode de réalisation et conforme à la figure 1, et pour lequel il faut déjà préalablement activer les zones des couches de matériau activable 114 et 116 autour des emplacements correspondants aux canaux 217 et 219 afin de créer ces derniers.

## Revendications

1. Dispositif microfluidique (110 ; 120 ; 200) comprenant au moins une première plaque (112 ; 122 ; 212) formant le substrat et présentant au moins une perforation (113; 1251; 213)) et, de chaque côté de cette première plaque (112 ; 122 ; 212), en au moins plusieurs emplacements, un matériau apte à délimiter des portions de canaux, ledit matériau étant formé, en au moins un de ces emplacements, d'un matériau activable (114, 116; 126, 127; 214, 216) pouvant faire varier son volume par activation, ledit matériau étant agencé auxdits emplacements selon une disposition qui permet, lors d'une première phase et par activation d'au moins un emplacement constitué dudit matériau activable, la transformation depuis une première configuration vers une deuxième configuration, ce par quoi est modifié un réseau tridimensionnel qui correspond, dans la deuxième configuration et selon le choix du ou des emplacements qui sont activés dans ladite première phase, à différents parcours de liquide présentant plusieurs portions de canaux (117, 119; 1264, 1265, 1266; 1273, 1274 ; 217, 219) parallèles au plan de la première plaque (112 ; 122 ; 212), situées dans des plans décalés, au moins de chaque côté de cette première plaque (112 ; 122 ; 212), et entre lesquelles se situe au moins une desdites perforations (113; 1251; 213).

2. Dispositif (110 ; 120) selon la revendication 1, **caractérisé en ce que** ledit matériau activable est disposé en au moins un emplacement situé de chaque côté de ladite première plaque (112 ; 122 ; 212).

3. Dispositif (110 ; 120) selon la revendication 1 ou 2, **caractérisé en ce que** lors de la première phase, lors de la transformation depuis la première configuration vers la deuxième configuration, la modification du réseau tridimensionnel correspond à une création, entre ces emplacements activés, desdits canaux (117, 119; 1264, 1265, 1266; 1273, 1274) formant, avec ladite perforation (113; 1251), ledit réseau tridimensionnel.

4. Dispositif (110 ; 120) selon la revendication 3, **caractérisé en ce que** la disposition du matériau activable (114, 116; 126, 127) permet, dans une deuxième phase au cours de laquelle on active des emplacements non préalablement activés, de combler des canaux (117, 119; 1264, 1265, 1266; 1273, 1274) précédemment crées lors de la première phase, ce par quoi on referme au moins une portion du réseau tridimensionnel.

5. Dispositif (110) selon l'une quelconque des revendications 1 à 3, **caractérisé en ce que** lors de la première phase, lors de la transformation depuis la première configuration vers la deuxième configuration, la modification du réseau tridimensionnel correspond à une création, entre ces emplacements activés, des canaux (117, 119;) de chaque côté de la première plaque (112), ces canaux (117, 119;) formant, avec ladite perforation (113), ledit réseau tridimensionnel.

6. Dispositif (110) selon la revendication 5, **caractérisé en ce que** la disposition du matériau activable (114, 116) permet, dans une deuxième phase au cours de laquelle on active des emplacements non préalablement activés, de combler des canaux (117, 119) précédemment crées lors de la première phase, ce par quoi on referme au moins une portion du réseau tridimensionnel de chaque côté de la première plaque (112).

7. Dispositif (120) selon l'une quelconque des revendications 3 à 4, **caractérisé en ce qu'**il comporte en outre au moins une deuxième plaque de substrat présentant des perforations (1251; 213) décalées par rapport aux perforations (113; 1251; 213) de la première plaque (122 ; 212), le matériau activable (126, 127) disposé entre la première plaque (122) et la deuxième plaque présentant au moins un passage situé dans le prolongement de l'une des perforations (1251) de la première plaque (122) de sorte que lors de la première phase, l'activation des emplacements du matériau activable (126, 127) permet la création de canaux (1264, 1265, 1266, 1273, 1274) réalisant la mise en communication de liquide entre une perforation (1251) de la première plaque (122) et une perforation (1251) de la deuxième plaque.

8. Dispositif (120) selon la revendication 7, **caractérisé en ce que** lors d'une deuxième phase, l'activation d'autres emplacements du matériau activable (126, 127) situé entre la première plaque (122) et la deuxième plaque, permet la fermeture des canaux (1264, 1265, 1266; 1273, 1274) crées pendant la première phase de façon à empêcher la communication de liquide entre ladite perforation (1251) de la deuxième plaque et ladite perforation (1251) de la première plaque (122).

9. Dispositif (120) selon la revendication 7 ou 8, **caractérisé en ce qu'**il comporte en outre au moins une troisième plaque de substrat présentant des perforations (1251) décalées par rapport aux perforations (1251) de la deuxième plaque, le matériau activable (126, 127) étant disposé également entre la deuxième plaque et la troisième plaque et présentant au moins un passage situé dans le prolongement de l'une des perforations (1251) de la deuxième plaque de sorte que lors d'une troisième phase, l'activation des emplacements du matériau activable (126, 127) situé entre la deuxième plaque et la troisième plaque permet la création de canaux (1264, 1265, 1266; 1273, 1274) réalisant la mise en communication de liquide entre une perforation (1251) de la deuxième plaque et une perforation (1251) de la troisième plaque.

10. Dispositif (120) selon l'une quelconque des revendications précédentes, **caractérisé en ce qu'**il comporte en outre, en regard des emplacements de matériau activable (126, 127) susceptibles de former des canaux (1264, 1265, 1266; 1273, 1274), une couche anti-adhésion entre la première plaque (112 ; 122) et le matériau activable (126, 127).

11. Dispositif (200) selon la revendication 1 ou 2, **caractérisé en ce que** dans la première configuration il existe un réseau tridimensionnel créant un parcours de liquide avec plusieurs portions de trajets formées de canaux (217, 219) parallèles au plan de la première plaque (112 ; 122 ; 212) et situés dans des plans décalés, et au moins de chaque côté de cette première plaque (112 ; 122 ; 212), entre lesquelles le liquide passe par une desdites perforations (113; 1251; 213) et **en ce que**, lors de la première phase, la modification du réseau tridimensionnel correspond à une fermeture d'au moins un desdits canaux (217, 219) par activation des emplacements correspondants du matériau activable, ce par quoi on forme une deuxième configuration obligeant le liquide à sortir du canal ainsi fermé et à se déplacer dans le réseau.

12. Dispositif (200) selon la revendication 11, **caractérisé en ce que** lors de la première phase, on active successivement plusieurs emplacements de matériau activable (114, 116; 126, 127; 214, 216), ce par quoi on réalise successivement la fermeture de plusieurs desdits canaux (217, 219), ce qui oblige le liquide à sortir du canal qui se ferme et à se déplacer successivement dans le réseau.

13. Dispositif (110 ; 120 ; 200) selon l'une quelconque des revendications précédentes, **caractérisé en ce que** ledit matériau activable (114, 116; 126, 127; 214, 216) est formé d'au moins une couche recouvrant la première plaque (112 ; 122 ; 212).

14. Dispositif (110 ; 120 ; 200) selon l'une quelconque des revendications précédentes, **caractérisé en ce que** ledit matériau activable (114, 116; 126, 127; 214, 216) peut être activé thermiquement, chimiquement ou par une stimulation électromagnétique.

15. Dispositif (110 ; 120 ; 200) selon l'une quelconque des revendications précédentes, **caractérisé en ce que** ledit matériau activable (114, 116; 126, 127; 214, 216) est du type qui augmente de volume lorsqu'il est activé.

16. Utilisation du dispositif (110 ; 120 ; 200) selon l'une quelconque des revendications précédentes, pour la réalisation d'un mélange d'au moins deux liquides différents, ledit mélange étant réactionnel.

17. Utilisation selon la revendication 16, **caractérisée en ce que** ledit dispositif (110 ; 120 ; 200) permet de conduire ledit mélange de liquides vers une cavité permettant une analyse par détection de type optique, électrochimique, électromagnétique ou magnétique.

## Claims

1. A microfluidic device (110; 120; 200) including a first plate (112; 122; 212) forming the substrate and including one or more perforations (113; 1251; 213) and, on each side of this first plate (112; 122; 212), at more than one location, a material that is adapted to define passage portions and is formed, at one or more of these locations, of an activatable material (114, 116; 126, 127; 214, 216) the volume of which can be varied by activating it, said material being arranged at said locations in such a way that, in a first phase, by activating one or more locations consisting of said activatable material, a first configuration is transformed into a second configuration, which modifies a three-dimensional network that, in the second configuration and depending on the locations chosen to be activated in said first phase, consists of different liquid paths having several passage portions (117, 119; 1264, 1265, 1266; 1273, 1274; 217, 219) situated in offset planes parallel to the plane of the first plate (112; 122; 212), at least on each side of this first plate (112; 122; 212), and between which said one or more perforations (113; 1251; 213) is situated.

2. A device (110; 120) according to claim 1, **characterized in that** said activatable material is disposed at one or more locations on each side of said first plate (112; 122; 212).

3. A device (110; 120) according to claims 1 or claim 2, **characterized in that**, during the transformation from the first configuration to the second configuration in the first phase, the modification of the three-dimensional network creates between the activated locations said passages (117, 119; 1264, 1265, 1266; 1273, 1274) forming with said perforation (113; 1251) said three-dimensional network.

4. A device (110; 120) according to claim 3, **characterized in that** the activatable material (114, 116; 126, 127) is disposed so that, in a second phase during which locations not previously activated are activated, passages (117, 119; 1264, 1265, 1266; 1273, 1274) previously created during the first phase are filled, which shuts off at least a portion of the three-dimensional network.

5. A device (110) according to any one of claims 1 to 3, **characterized in that**, during the transformation from the first configuration to the second configuration in the first phase, the modification of the three-dimensional network creates between these activated locations passages (117, 119) on each side of the first plate (112) forming with said perforation (113) said three-dimensional network.

6. A device (110) according to claim 5, **characterized in that** the disposition of the activatable material (114, 116) is such that, in a second phase during which locations not previously activated are activated, passages (117, 119) previously created during the first phase are filled, which shuts off at last a portion of the three-dimensional network on each side of the first plate (112).

7. A device (120) according to claim 3 or claim 4, **characterized in that** it further includes a second substrate plate including perforations (1251; 213) offset relative to the perforations (113; 1251; 213) of the first plate (122; 212), the activatable material (126, 127) disposed between the first plate (122) and the second plate including one or more passages aligned with one of the perforations (1251) of the first plate (122) so that activating the locations of the activatable material (126, 127) in the first phase creates passages (1264, 1265, 1266; 1273, 1274) establishing liquid communication between a perforation (1251) of the first plate (122) and a perforation (1251) of the second plate.

8. A device (120) according to claim 7, **characterized in that** activating other locations of the activatable material (126, 127) disposed between the first plate (122) and the second plate in a second phase shuts off the passages (1264, 1265, 1266; 1273, 1274) created in the first phase to block liquid communication between said perforation (1251) of the second plate and said perforation (1251) of the first plate (122).

9. A device (120) according to claim 7 or claim 8, **characterized in that** it further includes a third substrate plate including perforations (1251) offset relative to the perforations (1251) of the second plate, the activatable material (126, 127) being also disposed between the second plate and the third plate and including one or more passages aligned with one of the perforations (1251) of the second plate so that activating the locations of the activatable material (126, 127) situated between the second plate and the third plate in a third phase creates passages (1264, 1265, 1266; 1273, 1274) establishing liquid communication between a perforation (1251) of the second plate and a perforation (1251) of the third plate.

10. A device (120) according to any preceding claim, **characterized in that** it further includes, facing the locations of activatable material (126, 127) adapted to form passages (1264, 1265, 1266; 1273, 1274), a non-stick layer between the first plate (112; 122) and the activatable material (126, 127).

11. A device (200) according to claim 1 or claim 2, **characterized in that** in the first configuration there exists a three-dimensional network creating a liquid path with path portions formed of passages (217, 219) situated in offset planes parallel to the plane of the first plate (112; 122; 212), at least on each side of this first plate (112; 122; 212), and between which the liquid passes through one of said perforations (113; 1251; 213) and **characterized in that** the modification of the three-dimensional network in the first phase shuts off of one or more of said passages (217, 219) by activating the corresponding locations of the activatable material, whereby a second configuration is formed obliging the liquid to exit the passage shut off in this way and to move in the network.

12. A device (200) according to claim 11, **characterized in that** a number of locations of activatable material (114, 116; 126, 127; 214, 216) are activated in succession in the first phase, whereby a number of said passages (217, 219) are shut off in succession, which obliges the liquid to exit successively the passages that are shut off and to move gradually in the network.

13. A device (110; 120; 200) according to any preceding claim, **characterized in that** said activatable material (114, 116; 126, 127; 214, 216) is formed of one or more layers covering the first plate (112; 122; 212).

14. A device (110; 120; 200) according to any preceding claim, **characterized in that** said activatable material (114, 116; 126, 127; 214, 216) can be activated thermally, chemically or by a electromagnetic stimulation.

15. A device (110; 120; 200) according to any preceding claim, **characterized in that** said activatable material (114, 116; 126, 127; 214, 216) is of the type that increases in volume when it is activated.

16. Use of the device (110; 120; 200) according to any preceding claim to produce a mixture of at least two different liquids, said mixture being a reaction mixture.

17. Use according to claim 16, **characterized in that** said device (110; 120; 200) is adapted to convey said mixture of liquids to a cavity enabling analysis by optical, electrochemical, electromagnetic or magnetic sensing.

## Patentansprüche

1. Mikrofluidische Vorrichtung (110; 120; 200), umfassend wenigstens eine erste Platte (112; 122; 212), die das Substrat bildet und die wenigstens ein Loch (113; 1251; 213) aufweist, sowie auf jeder Seite dieser ersten Platte (112; 122; 212), an wenigstens mehreren Stellen, ein Material, das geeignet ist, Kanalabschnitte zu begrenzen, wobei das Material an wenigstens einer dieser Stellen von einem aktivierbaren Material (114, 116; 126, 127; 214, 216) gebildet ist, das sein Volumen durch Aktivierung ändern kann, wobei das Material an den Stellen entsprechend einer Anordnung angeordnet ist, die während einer ersten Phase und durch Aktivieren wenigstens einer von dem aktivierbaren Material gebildeten Stelle die Umwandlung von einer ersten Ausbildung zu einer zweiten Ausbildung ermöglicht, wodurch ein dreidimensionales Netz verändert wird, das in der zweiten Ausbildung und je nach Wahl der Stelle oder Stellen, die in der ersten Phase aktiviert werden, unterschiedlichen Flüssigkeitsstrecken entspricht, die mehrere Kanalabschnitte (117, 119; 1264, 1265, 1266; 1273, 1274; 217, 219) aufweisen, welche zur Ebene der ersten Platte (112; 122; 212) parallel verlaufen, in versetzten Ebenen liegen, wenigstens auf jeder Seite dieser ersten Platte (112; 122; 212), und zwischen denen sich wenigstens eines der Löcher (113; 1251; 213) befindet.

2. Vorrichtung (110; 120) nach Anspruch 1, **dadurch gekennzeichnet, daß** das aktivierbare Material an wenigstens einer auf jeder Seite der ersten Platte (112; 122; 212) befindlichen Stelle angeordnet ist.

3. Vorrichtung (110; 120) nach Anspruch 1 oder 2, **dadurch gekennzeichnet, daß** während der ersten Phase, während der Umwandlung von der ersten Ausbildung zur zweiten Ausbildung, die Veränderung des dreidimensionalen Netzes einer Erzeugung - zwischen diesen aktivierten Stellen - der Kanäle (117, 119; 1264, 1265, 1266; 1273, 1274) entspricht, die mit dem Loch (113; 1251) das dreidimensionale Netz bilden.

4. Vorrichtung (110; 120) nach Anspruch 3, **dadurch gekennzeichnet, daß** die Anordnung des aktivierbaren Materials (114, 116; 126, 127) in einer zweiten Phase, im Laufe derer zuvor nicht aktivierte Stellen aktiviert werden, ermöglicht, zuvor während der ersten Phase erzeugte Kanäle (117, 119; 1264, 1265, 1266; 1273, 1274) aufzufüllen, wodurch wenigstens ein Abschnitt des dreidimensionalen Netzes wieder verschlossen wird.

5. Vorrichtung (110) nach einem der Ansprüche 1 bis 3, **dadurch gekennzeichnet, daß** während der ersten Phase, während der Umwandlung von der ersten Ausbildung zur zweiten Ausbildung die Veränderung des dreidimensionalen Netzes einer Erzeugung der Kanäle (117, 119) zwischen diesen aktivierten Stellen, auf jeder Seite der ersten Platte (112) entspricht, wobei diese Kanäle (117, 119) mit dem Loch (113) das dreidimensionale Netz bilden.

6. Vorrichtung (110) nach Anspruch 5, **dadurch gekennzeichnet, daß** die Anordnung des aktivierbaren Materials (114, 116) in einer zweiten Phase, im Laufe derer zuvor nicht aktivierte Stellen aktiviert werden, ermöglicht, zuvor während der ersten Phase erzeugte Kanäle (117, 119) aufzufüllen, wodurch wenigstens ein Abschnitt des dreidimensionalen Netzes auf jeder Seite der ersten Platte (112) wieder verschlossen wird.

7. Vorrichtung (120) nach einem der Ansprüche 3 bis 4, **dadurch gekennzeichnet, daß** sie ferner wenigstens eine zweite Substratplatte umfaßt, die Löcher (1251; 213) aufweist, welche zu den Löchern (113; 1251; 213) der ersten Platte (122; 212) versetzt sind, wobei das zwischen der ersten Platte (122) und der zweiten Platte angeordnete aktivierbare Material (126, 127) wenigstens einen Durchgang aufweist, der in der Verlängerung von einem der Löcher (1251) der ersten Platte (122) gelegen ist, so daß während der ersten Phase die Aktivierung der Stellen des aktivierbaren Materials (126, 127) die Erzeugung von Kanälen (1264, 1265, 1266, 1273, 1274) ermöglicht, die die Flüssigkeitsverbindung zwischen einem Loch (1251) der ersten Platte (122) und einem Loch (1251) der zweiten Platte herstellen.

8. Vorrichtung (120) nach Anspruch 7, **dadurch gekennzeichnet, daß** während einer zweiten Phase die Aktivierung weiterer Stellen des zwischen der ersten Platte (122) und der zweiten Platte befindlichen aktivierbaren Materials (126, 127) das Verschließen der während der ersten Phase erzeugten Kanäle (1264, 1265, 1266; 1273, 1274) ermöglicht, so daß die Flüssigkeitsverbindung zwischen dem Loch (1251) der zweiten Platte und dem Loch (1251) der ersten Platte (122) unterbunden wird.

9. Vorrichtung (120) nach Anspruch 7 oder 8, **dadurch gekennzeichnet, daß** sie ferner wenigstens eine dritte Substratplatte umfaßt, die Löcher (1251) aufweist, welche zu den Löchern (1251) der zweiten Platte versetzt sind, wobei das aktivierbare Material (126, 127) auch zwischen der zweiten Platte und der dritten Platte angeordnet ist und wenigstens einen Durchgang aufweist, der in der Verlängerung von einem der Löcher (1251) der zweiten Platte gelegen ist, so daß während einer dritten Phase die Aktivierung der Stellen des zwischen der zweiten Platte und der dritten Platte befindlichen aktivierbaren Materials (126, 127) die Erzeugung von Kanälen (1264, 1265, 1266, 1273, 1274) ermöglicht, die die Flüssigkeitsverbindung zwischen einem Loch (1251) der zweiten Platte und einem Loch (1251) der dritten Platte herstellen.

10. Vorrichtung (120) nach einem der vorhergehenden Ansprüche, **dadurch gekennzeichnet, daß** sie ferner gegenüber den Stellen aktivierbaren Materials (126, 127), die geeignet sind, Kanäle (1264, 1265, 1266; 1273, 1274) zu bilden, eine Antihaftschicht zwischen der ersten Platte (112; 122) und dem aktivierbaren Material (126, 127) umfaßt.

11. Vorrichtung (200) nach Anspruch 1 oder 2, **dadurch gekennzeichnet, daß** in der ersten Ausbildung ein dreidimensionales Netz vorliegt, das eine Flüssigkeitsstrecke mit mehreren Streckenabschnitten erzeugt, die von zur Ebene der ersten Platte (112; 122; 212) parallel verlaufenden und - wenigstens auf jeder Seite dieser ersten Platte (112; 122; 212) - in versetzten Ebenen liegenden Kanälen (217, 219) gebildet sind und zwischen denen die Flüssigkeit über eines der Löcher (113; 1251; 213) strömt, und daß während der ersten Phase die Veränderung des dreidimensionalen Netzes einem Schließen von wenigstens einem der Kanäle (217, 219) durch Aktivieren der entsprechenden Stellen des aktivierbaren Materials entspricht, wodurch eine zweite Ausbildung gebildet wird, die die Flüssigkeit zwingt, den so verschlossenen Kanal zu verlassen und sich in dem Netz zu bewegen.

12. Vorrichtung (200) nach Anspruch 11, **dadurch gekennzeichnet, daß** während der ersten Phase nacheinander mehrere Stellen aktivierbaren Materials (114, 116; 126, 127; 214, 216) aktiviert werden, wodurch nacheinander das Schließen mehrerer der Kanäle (217, 219) bewirkt wird, was die Flüssigkeit zwingt, den sich schließenden Kanal zu verlassen und sich nach und nach in dem Netz zu bewegen.

13. Vorrichtung (110; 120; 200) nach einem der vorhergehenden Ansprüche, **dadurch gekennzeichnet, daß** das aktivierbare Material (114, 116; 126, 127; 214, 216) von wenigstens einer die erste Platte (112; 122; 212) überziehenden Schicht gebildet ist.

14. Vorrichtung (110; 120; 200) nach einem der vorhergehenden Ansprüche, **dadurch gekennzeichnet, daß** das aktivierbare Material (114, 116; 126, 127; 214, 216) thermisch, chemisch oder durch eine elektromagnetische Stimulation aktiviert werden kann.

15. Vorrichtung (110; 120; 200) nach einem der vorhergehenden Ansprüche, **dadurch gekennzeichnet, daß** das aktivierbare Material (114, 116; 126, 127; 214, 216) von dem Typ ist, der an Volumen zunimmt, wenn er aktiviert wird.

16. Verwendung der Vorrichtung (110; 120; 200) nach einem der vorhergehenden Ansprüche, für die Herstellung eines Gemischs aus wenigstens zwei unterschiedlichen Flüssigkeiten, wobei das Gemisch ein Reaktionsgemisch ist.

17. Verwendung nach Anspruch 16, **dadurch gekennzeichnet, daß** die Vorrichtung (110; 120; 200) ermöglicht, das Flüssigkeitsgemisch zu einem Hohlraum zu führen, der eine Analyse mittels Detektion vom optischen, elektrochemischen, elektromagnetischen oder magnetischen Typ ermöglicht.
